# EUROPEAN PATENT SPECIFICATION

(11) **EP 1 202 176 B1**
(45) Date of publication and mention of the grant of the patent: **25.04.2012**
(21) Application number: 00410131.7
(22) Date of filing: 31.10.2000
(51) Int. Cl.: G06F 9/44, G06F 9/54

(54) **Message-based software system**
Nachrichtenorientiertes Softwaresystem
Système logiciel basé sur des messages

(43) Date of publication of application: 02.05.2002
(73) Proprietor: Hewlett-Packard Development Company, L.P., Houston, TX 77070 (US)
(72) Inventor: Bouat, Sébastian, 38920 Crolles (FR); Quervel, Thierry, 38000 Grenoble (FR)
(74) Representative: Harrison Goddard Foote

(56) References cited:
- WO-A-97/22928
- GB-A- 2 348 025
- US-A- 5 664 010
- TOMASIC A ET AL: "SCALING HETEROGENEOUS DATABASES AND THE DESIGN OF DISCO" PROCEEDINGS OF THE INTERNATIONAL CONFERENCE ON DISTRIBUTED COMPUTING SYSTEMS,US,LOS ALAMITOS, IEEE COMP. SOC. PRESS, vol. CONF. 16, 27 May 1996 (1996-05-27), pages 449-457, XP000640207 ISBN: 0-8186-7398-2
- WILLIAMS P: "IBM MQSERIES COMMERCIAL MESSAGING" SIGICE BULLETIN,ASSOCIATION FOR COMPUTING MACHINERING,US, vol. 20, no. 4, 1 April 1995 (1995-04-01), pages 7-COMPL, XP000525733
- LAKSHMI-RATAN R A: "THE LUCENT TECHNOLOGIES SOFTSWITCH - REALIZING THE PROMISE OF CONVERGENCE" BELL LABS TECHNICAL JOURNAL,BELL LABORATORIES,US, vol. 4, no. 2, April 1999 (1999-04), pages 174-195, XP000851517 ISSN: 1089-7089

## Description

This invention generally relates to logic systems, which use a message-based API, and in particular to telecommunication systems for example such systems used in Internet Protocol networks when carrying voice (voice IP).

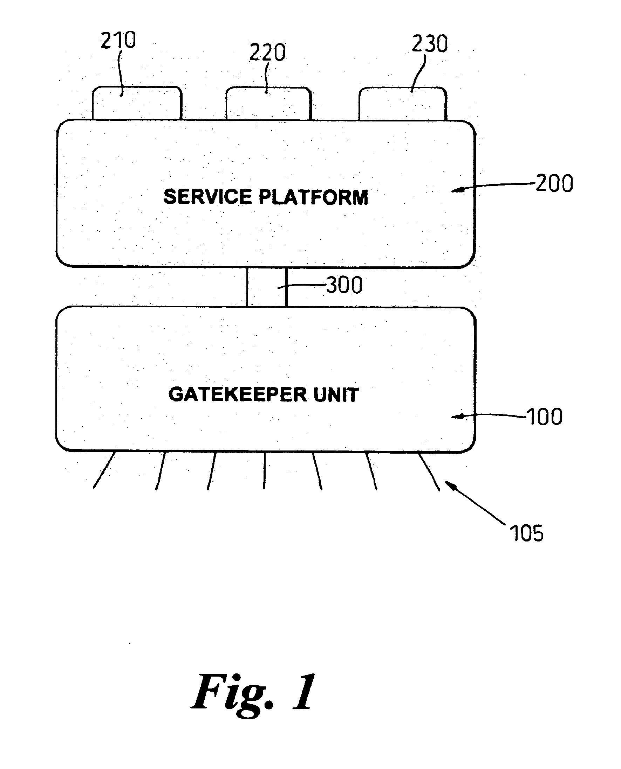

As illustrated in figure 1, a typical gatekeeper and service system consists of a gatekeeper unit 100 and a service platform 200 connected together via a suitable interface 300.

The main functions of these two elements are as follows :
- gatekeeper 100 handles Registration and Admission Service (RAS) messages, which, typically, consist of requests for obtaining subsequent so-called Q931 intermediate messages tending to establish a voice link between a caller and at least one callee. The RAS messages may be received by gatekeeper unit 100 from terminals of the Internet protocol network and also sent by gatekeeper unit 100 to the terminals. RAS and Q931 messages are defined by a standard called H323 standard.
- the service platform 200 hosts services such as signalling services, billing services, or call diversion services. Each of these services is handled by a specific service unit 210, 220, 230 of the platform 200.

Gatekeeper unit 100 and service platform 200 communicate together by exchanging messages.

These messages are transferred via interface 300, which is an intermediate unit that typically includes an Application Programming Interface (API), i.e. a set of libraries containing specific tools. Such an API is typically a message-based API, which is a message-based set of libraries. A message-based API uses a communication framework and is made of a set of messages conveyed over this framework.

In such known telecommunication systems, gatekeeper unit 100 receives messages from Internet protocol end-points (for example IP phones or Personal computers) through a series of connections 105, which messages each consist in a series of fields arranged together according to a specific format. This format is typically defined by a known standard called ASN.1.

Such incoming ASN.1 messages generally are in an encoded form under a known encoding standard called PER (Pact encoding Rules), so that they must be decoded by gatekeeper unit, which requires heavy decoding resources in the gatekeeper unit.

For each incoming message, the gatekeeper unit 100 decodes the message and then determines which service unit 210, 220, 230 is the destination unit that requires data contained in this message.

It appears that the data required by service units are different from one service unit to the other. Furthermore, the data are accepted by a given service unit 210, 220, 230, only if those data are under the specific format of the considered unit. For example, unit 210 may require a C data structure and unit 220 may require a XML data structure.

In the known art, the gatekeeper unit 100 sends the whole received message to the service platform 200, which then carries out filtering and formatting of the message upstreams of the service units 210, 220 and 230.

In order to allow those entire ASN.1 messages to be transferred between gatekeeper 100 and service platform 200, it is necessary to encode them back into the PER standard in the gatekeeper unit 100 upstreams of the API 300. Actually, for such complex messages, such encoding back reduces the transfer workload of the API 300. The PER - encoded message is once again decoded in the service platform 200 after the transit through API 300.

The objective problem is to reduce the heavy workload in the known telecommunication system, in particular to reduce the workload due to decoding/encoding.

The invention aims at solving this problem, i.e. at generally proposing a system and a method for a system using a message-based set of libraries that substantially reduces the resources required for conveying the messages so as to improve overall performance and efficiency.

GB2348025 relates to a message broker providing a publish/subscribe service and method of processing messages in a publish/subscribe environment. This document does not relate to a telecommunication system.

A system according to the invention is a system including a software component comprising input means for receiving messages from other systems, and output means for sending messages to a series of telecommunication service applications, characterised in that the system further includes a message-based set of libraries capable of transmitting messages issued from said output means of the software component to said series of applications, this message-based set of libraries being activated by said software component, in that the software component includes at least two formatter units for formatting messages into at least two different respective message formats for transmission to said applications via said message-based set of libraries.

A processing method according to the invention is a method for execution in a gatekeeper and service telecommunication system including a gatekeeper unit which has means for receiving, from an Internet protocol network, requests for establishment of communication links, and which gatekeeper unit further has means to send responses to such requests into such a network, the telecommunication system further including a service platform comprising at least two service units, each capable of deriving, from a message received from the gatekeeper unit, service information relating to a communication link to which said message is associated, the service units accepting messages in respective different message formats, and the system further including means for transferring messages from the gatekeeper unit to the service platform and from the service platform to the gatekeeper unit, the method being characterised by the step of formatting messages into said respective message formats of said at least two service units, this formatting step being carried out by at least two formatter units in the gatekeeper unit.

Further features, goals and advantages of the invention will appear to those skilled in the art through the following description, made with reference to the appended figures, in which :
- figure 1 illustrates a prior art telecommunication system ;
- figure 2 illustrates a telecommunication system embodying the present invention ;

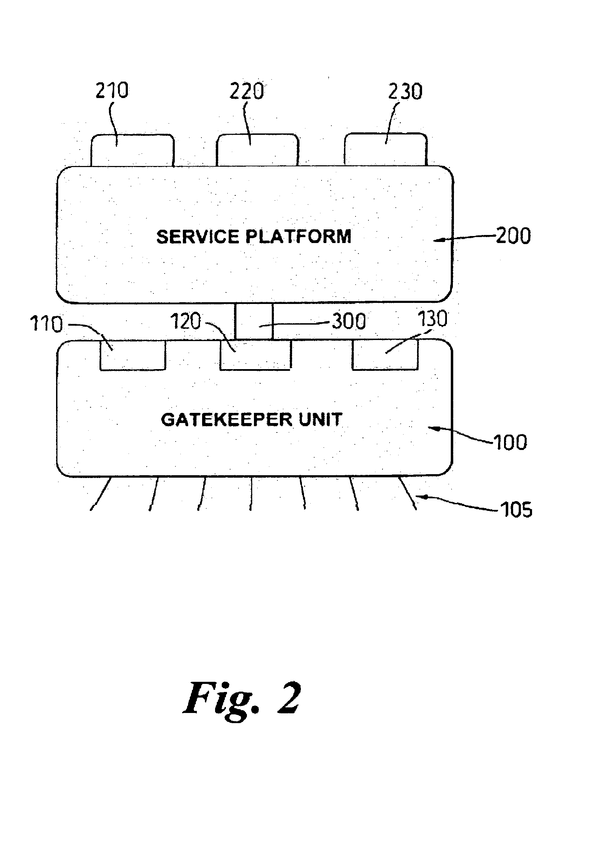

The telecommunication system illustrated in figure 2 (also called telecommunication stack or protocol stack) consists, similarly to the known stacks, of a gatekeeper unit 100 and a service platform 200, which includes service units 210, 220 and 230. The service units 210, 220 and 230 can be called "users" of the stack.

It also includes an intermediate transfer unit or interface 300 that has the role of transferring messages between the gatekeeper unit 100 and the service platform 200.

This interface here is a message-based Application Programming Interface, which is a message-based set of libraries. Such an API uses a communication framework and is made of a set of messages conveyed over this framework.

As for the known stacks, gatekeeper unit 100 receives messages in an encoded form through connections 105 and decodes those messages into local messages of the gatekeeper unit, in a local language of the gatekeeper unit. The local language is for example the C language.

The present gatekeeper unit 100 further includes a series of formatter units 110, 120, 130 that are each adapted to perform preliminary processing of the local messages before sending them through intermediate transfer unit 300. Each unit 110, 120 and 130 transforms local messages into messages of a particular format which complies to the specific requirements of a particular service unit among units 210, 220 and 230.

After decoding an incoming message and determining the service unit 210, 220 or 230 is concerned by the message, gatekeeper 100 transmits the decoded local message to the concerned unit or to the concerned units among units 110, 120 and 130. Units 110, 120 and 130 format the local messages into the specific formats of service units 210, 220 and 230 respectively.

When unit 110 receives a local representation of the ASN.1 message, which is constituted of a series of fields, it performs a selection among the fields of this message, and retrieves the only data that are necessary for the corresponding service unit 210 as will be described in greater detail hereinafter. Unit 110 only reads the values of the selected fields of the message and generates a filtered message with said selected values, in the format required by service unit 210.

Hence, unit 110 constitutes a filter that produces a simplified or shortened message, transmitted through the interface 300 with lesser bandwidth required and having a simpler presentation (no heavy PER encoding).

In the present example, interface 300 includes an API. More generally, interface 300 can easily be built, based on a known API model called "Opencall telecommunication stack".

Before transmitting the filtered message through API 300, unit 110 converts the retrieved data into the format of service unit 210, so that service platform 200 receives a message that is ready to be sent to service unit 210.

Service units 210, 220 and 230 may include C++ sets of instructions, Java applets, or programs in languages that are specific to given programming environments such as applications running on top of a platform called Service Execution Platform (SEP) developed by the applicant.

All of these types of applications know different data formats : a C application handles C-structures, a Java applet handles XML structures, a SEP platform uses either ASN.1 standard or another known proprietary format called "Data Description Language" (DDL).

The gatekeeper unit 100 of the present example can be replaced by any software component exporting a message-based application to some applications, for example any telecommunication software component aiming at authorising or not a communication link to be established.

Actually, the fact that a gatekeeper unit 100 according to the present invention has its own formatter units makes the service platform 200 and the interface 300 independent from the gatekeeper unit.

In other words, service platform 200 and also interface 300 can be adopted with any such software component having the formatting units 110, 120, 130. Actually the platform 200 does not have to perform any message re-formatting work that would be specific to a given software component 100 because the message format is the natural format understood by the concerned service unit.

Software component 100 is also independent from the service units 210, 220, 230 and from the message formats that the service units 210, 220, 230 can understand. The gatekeeper unit does not a-priori know about the service units. It is advantageously able to cope with the requirements of any service unit, i.e. to format each message in all the possible formats, each format corresponding to a specific formatter unit. The software component 100 is independent of any limitation of service units regarding data format.

In the present example, it is particularly advantageous that the formatter units 110, 120 and 130 are libraries that the software component 100 links at run-time.

Formatter units 110, 120, 130 will advantageously use an Application and Programming Interface including means for accessing the desired data of the message in the message representation that is local to gatekeeper unit 100.

In the above embodiment, formatter units 110, 120 and 130, perform both a filtering and a conversion of the local messages of gatekeeper unit 100 into languages that are specific to the concerned service units 210, 220, 230, respectively.

It is also possible according to the invention that formatter units realise only translations, or only filtering.

Hereafter are given two examples of formatter units that each perform both filtering and translation. The formatter unit according to example 1 formats data that are then forwarded to a billing unit. The formatter unit according to example 2 formats data that are then forwarded to a call diversion unit.

### Example 1

A billing service is a service that derives billing information associated with a communication link, on the basis of messages transmitted to this service.

A billing service typically deals with connection establishment and hang-up, in order to compute the duration of a call. In a simple model (fixed pricing) it simply needs the identity of the caller to set up customer's bill.

For illustrative purposes, let us consider that the billing service processes admission (ARQ) and disengage (DRQ) messages complying with the H323 standard.

The ASN.1 structure of an ARQ message is the following:

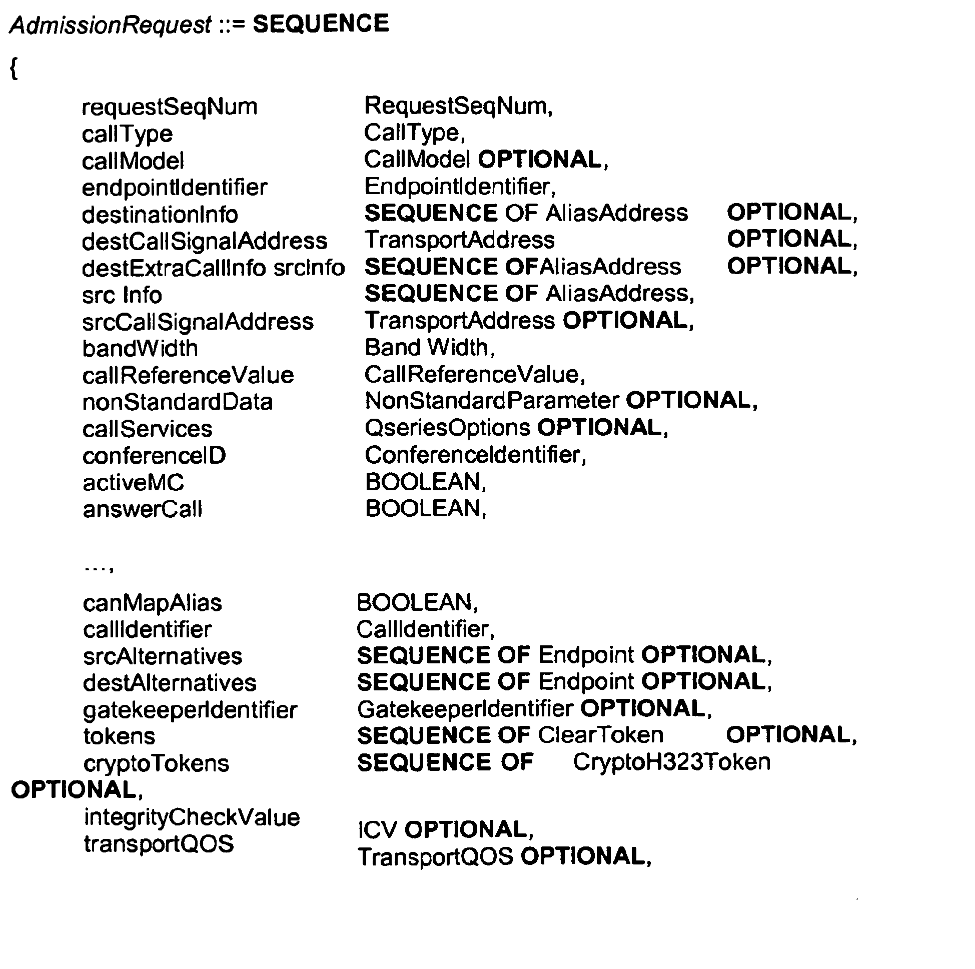

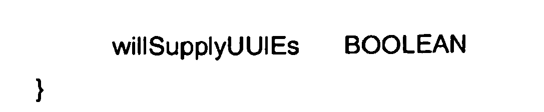

The identity of the caller can be found in *the Endpointldentitierfield* (& 128 character string). Therefore the ARQ message that the H323 gatekeeper unit 100 forwards to the billing service unit will hold this single field as a result of a filter function realised by the formatter unit.

A billing service running on an SEP platform of the OpenCall type uses DDL (Data Description Language) for formatting messages. This can be considered as a sub-set of C data structures, so that the representation of the ARQ message will be :

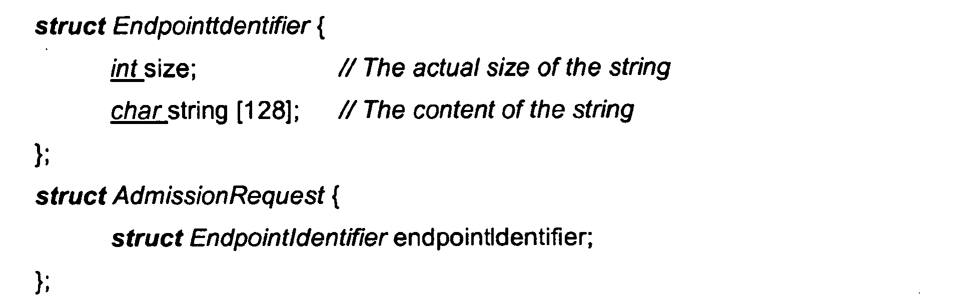

The formatter unit that produces such an ARQ message can build messages handling directly DDL data as C structures.

Another type of billing service may be implemented as an applet running in a Java Virtual Machine and using the XML standard for formatting data. The representation of the ARQ message would be in such case :

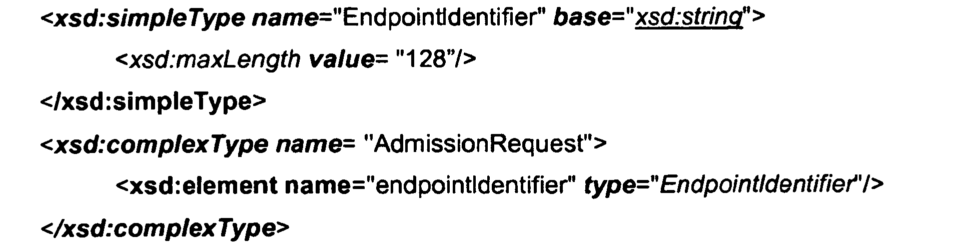

The considered formatter unit can build messages handling XML data through any existing XML engine available as a C library.

As concerns DRQ messages, they are only used as triggers, i.e. the service does not need to know the contents of any field thereof. Therefore, DRQ messages are forwarded by the gatekeeper units 100 as empty messages without representation.

### Example 2

Another service such as a call diversion service may be running at the same time as the billing service.

A call diversion is a service which, on the basis of a message transmitted to this service, derives information about an end point with which a communication link should be established, which end point is different from that initially designated in an original link designation. In other words, such a service looks at the called endpoint and forwards the call to another endpoint if the original one is registered for diversion.

Such a service needs the identity of the called endpoint, found from the *destinationInfo* field in an incoming ARQ message. Therefore, the structure of a DDL message to be directed to a call diversion service unit is quite different from the structure of a message sent to a billing service unit since it only contains the set of alias addresses of the called endpoint.

It is thus understood that the billing and the call diversion services use two distinct formatters that construct two different messages, each including a specific part of a same incoming ARQ message.

When many service units share the same data format (this applies for instance to OpenCall SEP services that all handle DDL messages), the generation of the formatter units can be automated as will now be described.

A formatter unit generator is provided to the user in the form of a graphical tool, allowing to select the fields and sub-fields each service unit needs in each message. The user also sets constraints on ASN.1 "sequence-of" types (arrays of items).

Sequence-of may be unbound, or upper bound may be high. Custom then needs to set a reasonable upper bound.

Then the service creation environment has means to generate automatically both the data types required for developing the service, and the formatter that converts messages from the gatekeeper into those data types and vice-versa (typically DDL).

Many service units may also share the same formatter unit. For instance a default formatter exporting a reasonable DDL subset of the H323 message-set could apply to most of the service units running on top of the OpenCall SEP. Other services with specific requirements should use their own formatter.

A formatter unit typically provides an encode/decode interface. It performs the encoding operation before forwarding a message to the service. It also processes messages received from the service unit through the decoding operation.

As already described, the formatter unit advantageously makes use of an API to access the local representation (LR) of messages within the gatekeeper unit, i.e. to read some fields of a message that is in a representation used in the gatekeeper. This API, hereafter called local representation API, performs 2 main operations:
- Get-field: retrieve the value of a field knowing its logical name (typically its path in the ASN.1 structure).
- Set-field: sets the value of a field knowing its logical name.

Formatter can both format messages directed to the service, and parse messages received from the service. Formatting extracts and presents data from the local representation of a request message so that it can be processed by the service. Parsing extracts data from a reply message and set then in the local representation of this reply.

In addition the Local Representation API should provide operators to know about optional fields, length of arrays, the selected alternative in choices, etc.

It has to be understood that, although the here described embodiment is a gatekeeper system, the invention applies to any software component that exchanges messages with telecommunication service applications and that exports a message based API to some a-priori unknown applications.

It also has to be understood that the different elements described above (service units 210, 220, 230, service platform 200, interface 300, gatekeeper unit 100, formatter units 110, 120, 130) can be physically implemented on one or several hardware equipments, it being understood that the hardware implementation of the system may be decorrelated from the logid implementation.

## Claims

1. A system comprising
a gatekeeper software component (100) adapted to handle messages relating to establishing a communication link between a caller and a callee, wherein each message comprises a series of fields arranged according to a specific format; said gatekeeper (100) comprising input means for receiving messages from other systems and output means for sending messages to a series of telecommunication service applications (210 to 230) that are arranged to provide a plurality of support services relating to such a communication link;
a message-based set of libraries (300) to transmit messages issued from said output means of the gatekeeper (100) to said series of telecommunication service applications (210 to 230), the message-based set of libraries (300) being activated by said gatekeeper(100);
the gatekeeper (100) including at least two formatter units (110, 120, 130) for selecting, from among the series of fields of the message, only those fields necessary for respective ones of said telecommunication service applications (210 to 230), and formatting messages into at least two different respective message formats for transmission to the respective ones of said telecommunication service applications (210 to 230) via said message-based set of libraries (300); said at least two different respective message formats each being a particular format which complies to the specific requirements of the respective ones of said telecommunication service applications (210 to 230).

2. A system according to claim 1, **characterised in that** the message-based set of libraries (300) comprises a message-based Application
Programming Interface.

3. The system of claim 1 or claim 2, **characterised in that** the gatekeeper (100) has means for receiving messages from an internet protocol network and second output means for sending messages into such a network.

4. The system of claim 3, **characterised in that** said gatekeeper (100) has means to receive requests to establish communication links from an internet protocol network, and means for sending into the network responses to such requests via said second output means.

5. The system of claim 4, **characterised in that** it further includes a service platform (200) comprising at least two applications in the form of at least two service units (210, 220, 230), each service unit having means for deriving from a message received from the gatekeeper (100) service information relating to a communication link with which said message is associated, the service units (210, 220, 230) accepting messages in respective different message formats, and **in that** said at least two formatter units (110, 120, 130) are capable of formatting messages into said two different respective message formats of said at least two service units.

6. The system of claim 4 or claim 5, **characterised in that** the gatekeeper (100) further includes means for decoding messages incoming from an Internet protocol network into a local representation of the gatekeeper (100).

7. The system of any one of the previous claims, **characterised in that** the software component (100) further includes means for dispatching messages to the formatter units (110, 120, 130).

8. The system of any one of the previous claims, **characterised in that** the formatter units further include means for receiving messages in response to the sent formatted messages, **in that** the gatekeeper (100) includes means for handling messages that consist of a series of fields, and **in that** at least one of the formatter units (110, 120, 130) includes means for setting a value of a field of a message handled by the gatekeeper (100) in accordance with at least one parameter of a received response-message.

9. The system of any one of the previous claims, **characterised in that** the gatekeeper (100) includes means for dispatching messages to the formatter units (110, 120, 130), and **in that** at least two formatter units (110, 120, 130) include respective means for converting dispatched messages into two respective different programming languages.

10. The system of any one of the previous claims, **characterised in that** said message-based set of libraries comprises an Application Programming Interface capable of transferring messages that are in different formats.

11. The system of any one of the previous claims, **characterised in that** said message-based set of libraries is adapted for transmitting differently formatted messages.

## Patentansprüche

1. System, das folgendes umfasst:
eine Gatekeeper-Softwarekomponente (100), welche Nachrichten bearbeiten kann, die sich auf die Herstellung eines Übermittlungsabschnitts zwischen einem Anrufer und einem Anrufempfänger beziehen, wobei jede Nachricht eine Reihe von Feldern umfasst, die gemäß einem bestimmten Format angeordnet sind, wobei der genannte Gatekeeper (100) eine Eingangseinrichtung für den Empfang von Nachrichten von anderen Systemen und eine Ausgangseinrichtung zum Senden von Nachrichten an eine Reihe von Telekommunikations-Dienstanwendungen (210 bis 230) umfasst, die so angeordnet sind, dass sie eine Reihe von unterstützenden Diensten in Bezug auf einen derartigen Übermittlungsabschnitt bereitstellen;
eine nachrichtenbasierte Reihe von Bibliotheken (300) zum Übermitteln von durch die genannte Ausgangseinrichtung des Gatekeepers (100) ausgegebenen Nachrichten an die genannte Reihe von Telekommunikations-Dienstanwendungen (210 bis 230), wobei die nachrichtenbasierte Reihe von Bibliotheken (300) durch den genannten Gatekeeper (100) aktiviert wird;
wobei der Gatekeeper (100) mindestens zwei Formatierungseinheiten (110, 120, 130) aufweist, zur Auswahl nur der Felder aus der Reihe von Feldern der Nachricht, die für entsprechende der genannten Telekommunikations-Dienstanwendungen (210 bis 230) erforderlich sind, und wobei die Nachrichten in mindestens zwei unterschiedliche entsprechende Nachrichtenformate zur Übermittlung an entsprechende der genannten Telekommunikations-Dienstanwendungen (210 bis 230) formatiert werden über die genannte nachrichtenbasierte Reihe von Bibliotheken (300); wobei die zumindest zwei unterschiedlichen entsprechenden Nachrichtenformate jeweils ein bestimmtes Format darstellen, das den spezifischen Anforderungen der entsprechenden der genannten Telekommunikations-Dienstanwendungen (210 bis 230) entspricht.

2. System nach Anspruch 1, **dadurch gekennzeichnet, dass** die genannte nachrichtenbasierte Reihe von Bibliotheken (300) eine nachrichtenbasierte Anwendungsprogrammierschnittstelle umfasst.

3. System nach Anspruch 1 oder 2, **dadurch gekennzeichnet, dass** der Gatekeeper (100) eine Einrichtung zum Empfang von Nachrichten von einem Internetprotokollnetzwerk und eine zweite Ausgangseinrichtung zum Senden von Nachrichten an ein solches Netzwerk aufweist.

4. System nach Anspruch 3, **dadurch gekennzeichnet, dass** der genannte Gatekeeper (100) eine Einrichtung zum Erzeugen von Übermittlungsabschnitten aus einem Internetprotokollnetzwerk aufweist sowie eine Einrichtung zum Senden von Antworten auf derartige Anfragen über die genannte zweite Ausgangseinrichtung an das Netzwerk.

5. System nach Anspruch 4, **dadurch gekennzeichnet, dass** es ferner ein Dienstplattform (200) aufweist, die mindestens zwei Anwendungen in Form von mindestens zwei Diensteinheiten (210, 220, 230) umfasst, wobei jede Diensteinheit eine Einrichtung aufweist, um von einer von dem Gatekeeper (100) empfangenen Nachricht Dienstinformationen abzuleiten, die sich auf einen Übermittlungsabschnitt beziehen, dem die genannte Nachricht zugeordnet ist, wobei die Diensteinheiten (210, 220, 230) Nachrichten in unterschiedlichen Nachrichtenformaten empfangen, und wobei die genannten mindestens zwei Formatierungseinheiten (110, 120, 130) Nachrichten in zwei unterschiedlichen entsprechenden Nachrichtenformaten der genannten mindestens zwei Diensteinheiten formatieren können.

6. System nach Anspruch 4 oder Anspruch 5, **dadurch gekennzeichnet, dass** der Gatekeeper (100) ferner eine Einrichtung zum Decodieren von Nachrichten aufweist, die von einem Internetprotokollnetzwerk eingehen, in eine lokale Darstellung des Gatekeepers (100).

7. System nach einem der vorstehenden Ansprüche, **dadurch gekennzeichnet, dass** die Softwarekomponente (100) ferner eine Einrichtung zum Absenden von Nachrichten an die Formatierungseinheiten (110, 120, 130) aufweist.

8. System nach einem der vorstehenden Ansprüche, **dadurch gekennzeichnet, dass** die Formatierungseinheiten ferner eine Einrichtung zum Empfangen von Nachrichten als Reaktion auf die übermittelten formatierten Nachrichten aufweist, wobei der Gatekeeper (100) eine Einrichtung zur Bearbeitung von Nachrichten aufweist, die aus einer Reihe von Feldern bestehen, und wobei zumindest eine der Formatierungseinheiten (110, 120, 130) eine Einrichtung zum Festsetzen eines Wertes eines Felds einer von dem Gatekeeper (100) bearbeiteten Nachricht gemäß mindestens einem Parameter einer empfangenen Antwortnachricht aufweist.

9. System nach einem der vorstehenden Ansprüche, **dadurch gekennzeichnet, dass** der Gatekeeper (100) eine Einrichtung zum Absenden von Nachrichten an die Formatierungseinheiten (110, 120, 130) aufweist, und wobei zumindest zwei Formatierungseinheiten (110, 120, 130) eine entsprechende Einrichtung zum Umwandeln abgesendeter Nachrichten in zwei entsprechend unterschiedliche Programmiersprachen aufweisen.

10. System nach einem der vorstehenden Ansprüche, **dadurch gekennzeichnet, dass** die genannte nachrichtenbasierte Reihe von Bibliotheken eine Anwendungsprogrammierschnittstelle umfasst, die Nachrichten übertragen kann, die unterschiedliche Formate aufweisen.

11. System nach einem der vorstehenden Ansprüche, **dadurch gekennzeichnet, dass** die genannte nachrichtenbasierte Reihe von Bibliotheken unterschiedlich formatierte Nachrichten übermitteln kann.

## Revendications

1. Système comprenant:
un composant logiciel contrôleur d'accès (100) adapté pour gérer des messages relatifs à l'établissement d'une liaison de communication entre un appelant et un appelé, dans lequel chaque message comprend une série de champs agencés selon un format spécifique ; ledit contrôleur d'accès (100) comprenant des moyens d'entrée pour recevoir des messages d'autres systèmes et des moyens de sortie pour envoyer des messages à une série d'applications de service de télécommunications (210 à 230) qui sont agencées pour fournir une pluralité de services de soutien relatifs à une telle liaison de communication ;
un ensemble de bibliothèques basées sur des messages (300) pour transmettre des messages émis desdits moyens de sortie du contrôleur d'accès (100) à ladite série d'applications de service de télécommunications (210 à 230), l'ensemble de bibliothèques basées sur des messages (300) étant activé par ledit contrôleur d'accès (100) ;
le contrôleur d'accès (100) comprenant au moins deux unités de formatage (110, 120, 130) pour sélectionner, parmi la série de champs du message, uniquement les champs nécessaires à celles respectives desdites applications de service de télécommunications (210 à 230), et pour formater des messages dans au moins deux différents formats de message respectifs à transmettre à celles respectives desdites applications de service de télécommunications (210 à 230) via ledit ensemble de bibliothèques basées sur des messages (300) ; lesdits au moins deux différents formats de message respectifs étant chacun un format particulier qui respecte les exigences spécifiques de celles respectives desdites applications de service de télécommunications (210 à 230).

2. Système selon la revendication 1, **caractérisé en ce que** l'ensemble de bibliothèques basées sur des messages (300) comprend une interface de programmation d'application basée sur des messages.

3. Système selon la revendication 1 ou 2, **caractérisé en ce que** le contrôleur d'accès (100) a des moyens pour recevoir des messages d'un réseau de protocole Internet et des seconds moyens de sortie pour envoyer des messages dans un tel réseau.

4. Système selon la revendication 3, **caractérisé en ce que** ledit contrôleur d'accès (100) a des moyens pour recevoir des requêtes pour établir des liaisons de communication d'un réseau de protocole Internet, et des moyens pour envoyer dans le réseau des réponses auxdites requêtes via lesdits seconds moyens de sortie.

5. Système selon la revendication 4, **caractérisé en ce qu'**il comprend en outre une plateforme de service (200) comprenant au moins deux applications sous la forme d'au moins deux unités de service (210, 220, 230), chaque unité de service comprenant des moyens pour dériver à partir d'un message reçu du contrôleur d'accès (100) des informations de service relatives à une liaison de communication avec laquelle ledit message est associé, les unités de service (210, 220, 230) acceptant des messages dans différents formats de messages respectifs, et **en ce que** lesdites au moins deux unités de formatage (110, 120, 130) sont capables de formater des messages dans lesdits deux différents formats de message respectifs desdites au moins deux unités de service.

6. Système selon la revendication 4 ou 5, **caractérisé en ce que** le contrôleur d'accès (100) comprend en outre des moyens pour décoder des messages entrant d'un réseau de protocole Internet dans une représentation locale du contrôleur d'accès (100).

7. Système selon l'une quelconque des revendications précédentes, **caractérisé en ce que** le composant logiciel (100) comprend en outre des moyens pour distribuer des messages à des unités de formatage (110, 120, 130).

8. Système selon l'une quelconque des revendications précédentes, **caractérisé en ce que** les unités de formatage comprennent en outre des moyens pour recevoir des messages en réponse aux messages formatés envoyés, **en ce que** le contrôleur d'accès (100) comprend des moyens pour gérer des messages qui consistent en une série de champs, et **en ce qu'**au moins l'une des unités de formatage (110, 120, 130) comprend des moyens pour fixer une valeur d'un champ d'un message géré par le contrôleur d'accès (100) conformément à au moins un paramètre d'un message-réponse reçu.

9. Système selon l'une quelconque des revendications précédentes, **caractérisé en ce que** le contrôleur d'accès (100) comprend des moyens pour distribuer des messages à des unités de formatage (110, 120, 130), et **en ce qu'**au moins deux unités de formatage (110, 120, 130) comprennent des moyens respectifs pour convertir les messages distribués en deux langages de programmation différents respectifs.

10. Système selon l'une quelconque des revendications précédentes, **caractérisé en ce que** ledit ensemble de bibliothèques basées sur des messages comprend une interface de programmation d'application capable de transférer des messages qui sont dans différents formats.

11. Système selon l'une quelconque des revendications précédentes, **caractérisé en ce que** ledit ensemble de bibliothèques basées sur des messages est adapté pour transmettre des messages formatés différemment.
